# EUROPEAN PATENT SPECIFICATION

(11) **EP 4 025 804 B1**
(45) Date of publication and mention of the grant of the patent: **15.02.2023**
(21) Application number: 19829110.6
(22) Date of filing: 17.12.2019
(51) Int. Cl.: F16F 7/10, F16F 7/104, F16F 15/02

(54) **TUNED MASS DAMPER AND SYSTEM**
ABGESTIMMTER MASSENDÄMPFER UND SYSTEM
AMORTISSEUR DE MASSE ACCORDÉ ET SYSTÈME

(43) Date of publication of application: 13.07.2022
(73) Proprietor: Hitachi Energy Switzerland AG, 5400 Baden (CH)
(72) Inventor: BACKSTRÖM, Daniel, 724 61 Västerås (SE); ORTENMARK, Patrik, 731 97 Köping (SE)
(74) Representative: AWA Sweden AB
(86) International application number: PCT/EP2019/085728
(87) International publication number: WO 2021/121565

(56) References cited:
- CN-A- 109 577 363
- DE-B3-102004 045 433
- JP-B2- 2 991 610
- US-B1- 6 397 988

## Description

### Technical Field

The present disclosure generally relates to a tuned mass damper. In particular, a tuned mass damper for damping vibrations in a structure, and a system comprising a structure and a tuned mass damper, are provided.

### Background

Prior art seismic dampers mounted on power equipment are typically complex and expensive. Moreover, it is difficult and sometimes impossible to install such seismic dampers on existing power equipment in the event of an increase of seismic requirements.

US 3911199 A discloses a seismic motion-damper comprising an inertia element disposed within a container containing a fluid-liquid attached to an upper portion of upstanding electrical equipment. The damper is tuned so as, by utilizing sympathetic vibrations, tends to cancel out seismic vibrations.

Document CN 109 577 363 A discloses also a tuned mass damper for vibrations in a structure, which is regarded as the closest prior art.

### Summary

One object of the present disclosure is to provide a tuned mass damper for damping vibrations in a structure, such as a high voltage structure, which tuned mass damper improves seismic withstand capability of the structure. A further object of the present disclosure is to provide a tuned mass damper for damping vibrations in a structure, such as a high voltage structure, which tuned mass damper can improve seismic withstand capability in a wide range of different structures.

A still further object of the present disclosure is to provide a tuned mass damper for damping vibrations in a structure, where a natural frequency of the tuned mass damper can be easily adjusted.

A still further object of the present disclosure is to provide a tuned mass damper for damping vibrations in a structure, where an effective mass and/or relative damping characteristics of the tuned mass damper can be easily adjusted.

A still further object of the present disclosure is to provide a tuned mass damper for damping vibrations in a structure, which tuned mass damper enables a simple installation to the structure.

A still further object of the present disclosure is to provide a tuned mass damper for damping vibrations in a structure, which tuned mass damper can easily be retrofitted to an existing structure.

A still further object of the present disclosure is to provide a tuned mass damper for damping vibrations in a structure, which tuned mass damper has a simple design.

A still further object of the present disclosure is to provide a tuned mass damper for damping vibrations in a structure, which tuned mass damper has a reliable and robust design.

A still further object of the present disclosure is to provide a tuned mass damper for damping vibrations in a structure, which tuned mass damper is cost-effective.

A still further object of the present disclosure is to provide a tuned mass damper for damping vibrations in a structure, which tuned mass damper solves several or all of the foregoing objects in combination.

A still further object of the present disclosure is to provide a system comprising a structure and a tuned mass damper connected to the structure, which system solves one, several or all of the foregoing objects.

According to one aspect, there is provided a tuned mass damper for damping vibrations in a structure, the tuned mass damper comprising an elongated element having a free end and a joint end opposite to the free end; a fixation member for being fixed to the structure; a mass arrangement connected to the elongated element, wherein a line between the fixation member and the mass arrangement defines a neutral axis in a neutral position of the elongated element; a joint arranged between the joint end and the fixation member, the joint being arranged to allow movements of the elongated element in at least one displacement plane comprising the neutral axis; a spring arrangement arranged to exert a restoring spring force to the elongated element when the elongated element is displaced from the neutral position; and a damping arrangement arranged to exert a damping force against movements of the elongated element from the neutral position.

The function of the tuned mass damper is thus based on a pivoting elongated element with a mass arrangement attached thereto. The tuned mass damper is thereby simple and robust. During movement of the tuned mass damper, kinetic energy is dissipated by means of the damping arrangement. Loads on the structure, in particular during earthquakes, can thereby be reduced. The tuned mass damper thereby improves structural integrity of the structure.

The natural frequency of the tuned mass damper is basically defined by one or more spring constants of the spring arrangement, one or more damping coefficients of the damping arrangement, the mass of the mass arrangement, and the position of the mass arrangement along the elongated element. One, several or each of these parameters can be easily adjusted in order to adjust the natural frequency of the tuned mass damper. The position of the mass arrangement along the elongated element may be defined as the position of a center of gravity of the mass arrangement along the elongated element.

Due to the simple design of the tuned mass damper, the tuned mass damper can easily be post-mounted or retrofitted to an existing structure. The elongated element may be arranged to move in air ambient to the structure. Thus, the elongated element does for example not have to move within a liquid-filled vessel.

The tuned mass damper may be a passive tuned mass damper. For example, a passive tuned mass damper may not employ any actuators for controlling movement of the elongated element. Furthermore, once the mass arrangement is connected to the elongated element, the mass arrangement may remain fixed to the elongated element along the elongated element. That is, when connected to the elongated element, the mass arrangement may be maintained at a fixed position along the elongated element. However, the mass arrangement may optionally be allowed to rotate around the elongated element.

A length of the elongated element may for example be at least five times, such as at least ten times, such as at least 15 times, such as at least 20 times, a width of the elongated element. Alternatively, or in addition, the elongated element may be a column or lever.

The elongated element may be substantially straight, or straight. In this case, a longitudinal axis of the elongated element may define the neutral axis.

The spring arrangement may comprise at least one spring arranged functionally between the joint end and the fixation member. The tuned mass damper can employ a wide range of commercially available springs for the spring arrangement. This contributes to an improved modular design. Each spring of the spring arrangement may for example comprise a coil spring or a flat spring. Each spring may be configured to provide a restoring spring force dependent on, such as proportional to, a displacement of the mass arrangement in the at least one displacement plane.

Alternatively, the spring arrangement may be integrated in the joint. To this end, the joint may be constituted by a resilient joint.

The damping arrangement may comprise at least one damper arranged functionally between the joint end and the fixation member. The tuned mass damper can employ a wide range of commercially available dampers for the damping arrangement. This contributes to an improved modular design. Each damper of the damping arrangement may for example comprise a dashpot, a hydraulic damper, a wire damper, or a damping element (e.g. a C-shaped bracket of soft steel) configured to deform plastically by a relative movement between the elongated element and the fixation member. Each damper may be configured to provide a damping force dependent on, such as proportional to, a displacement velocity of the mass arrangement in the at least one displacement plane.

Alternatively, the damping arrangement may be integrated in the joint. To this end, the joint may be constituted by a friction joint, for example a resilient friction joint.

The mass arrangement may be fixedly connected to the elongated element, at least during operation of the tuned mass damper. When the mass arrangement is fixed to the elongated element, the elongated element may be configured to automatically adopt the neutral position, in the absence of any vibrations in the structure.

Throughout the present disclosure, the tuned mass damper may be a seismic damper, i.e. configured to damp seismic vibrations in a structure.

The mass arrangement may be adjustable along the elongated element. By adjusting the mass arrangement along the elongated element, a natural frequency (eigenfrequency) of the tuned mass damper can be adjusted. In this way, the natural frequency of the tuned mass damper can be adjusted while the tuned mass damper is connected to the structure, in order to match the natural frequency of the structure.

By adjusting the mass arrangement closer to the joint, the stiffness of the tuned mass damper is increased. By adjusting the mass arrangement further away from the joint, the stiffness of the tuned mass damper is decreased. In this way, the natural frequency of the tuned mass damper can easily be adjusted to match major natural frequencies of the structure.

The mass arrangement may be adjustable along the elongated element to change the natural frequency of the tuned mass damper. For example, by adjusting the mass arrangement along the elongated element, the natural frequency of the tuned mass damper may be changed between 0.15 Hz to 40 Hz, such as 0.5 Hz to 15 Hz, such as 1 Hz to 10 Hz, such as 1 Hz to 2 Hz. Alternatively, or in addition, the mass arrangement may be adjustable along the elongated element to change the natural frequency of the tuned mass damper from 1 Hz and above.

The mass arrangement may comprise at least one weight body, and one or more of the at least one weight body may be movable along the elongated element in order to adjust the mass arrangement along the elongated element. Each weight body may for example be attached to the elongated element by means of a pin engaging in an opening in the elongated element. Throughout the present disclosure, each weight body may made of a composite material or a ceramic material.

The mass arrangement may comprise at least one weight body, and one or more of the at least one weight body may be detachably attached to the elongated element, and the mass arrangement may be adjusted along the elongated element by removal of one or more of the at least one weight body from the elongated element. Each weight body may be configured to be guided over the free end of the elongated element in order to add or remove the weight body. Added weight bodies may then be fixed to the elongated element by means of a pin engaging in an opening in the elongated element. Alternatively, or in addition, each weight body may be closed to be attached to the elongated element, and opened to be detached from the elongated element, and vice versa.

One, several or each of the at least one weight body may for example be welded or glued to the elongated element. In this way, one or more weight bodies can be permanently fixed to the elongated element.

The at least one displacement plane comprises a first displacement plane and a second displacement plane. The first displacement plane is non-parallel with the second displacement plane. For example, the first displacement plane and the second displacement plane may be substantially perpendicular, or perpendicular, to each other.

The spring arrangement comprises a first spring associated with the first displacement plane and a second spring associated with the second displacement plane. In this way, the restoring spring force can be tailor made to match a structure with different directional behavior.

An attachment point of the first spring and/or an attachment point of the second spring is adjustable in order to adjust a spring characteristic of the spring force. For example, a primary end of the first spring may be detached from a first primary attachment point and a secondary end of the first spring may be detached from a first secondary attachment point. The primary end of the first spring may then be attached to a second primary attachment point, different from the first primary attachment point, and the secondary end of the first spring may be attached to a second secondary attachment point, different from the first secondary attachment point. The same may apply for the second spring.

The damping arrangement may comprise a first damper associated with the first displacement plane and a second damper associated with the second displacement plane. In this way, the damping force can be tailor made to match a structure with different directional behavior.

An attachment point of the first damper and/or an attachment point the second damper may be adjustable in order to adjust a damping characteristic of the damping force. For example, a primary end of the first damper may be detached from a first primary attachment point and a secondary end of the first damper may be detached from a first secondary attachment point. The primary end of the first damper may then be attached to a second primary attachment point, different from the first primary attachment point, and the secondary end of the first damper may be attached to a second secondary attachment point, different from the first secondary attachment point. The same may apply for the second damper.

The tuned mass damper may further comprise a primary first arm and a secondary first arm arranged in the first displacement plane, and a primary second arm and a secondary second arm arranged in the second displacement plane. In this case, the primary first arm may be rigidly connected to the elongated element and the secondary first arm may be rigidly connected to the fixation member, and the primary second arm may be rigidly connected to the elongated element and the secondary second arm may be rigidly connected to the fixation member. Each arm may comprise a plurality of attachment points, such as holes, for attachment of the springs and/or dampers. Some or all attachment points may be suitable for attaching both a spring or a damper (at different times).

The first spring may be connected to the primary first arm and to the secondary first arm, and the second spring may be connected to the primary second arm and to the secondary second arm. In this way, each of the first spring and the second spring is arranged functionally between the joint end and the fixation member.

The first damper may be connected to the primary first arm and to the secondary first arm, and the second damper may be connected to the primary second arm and to the secondary second arm. In this way, each of the first damper and the second damper is arranged functionally between the joint end and the fixation member.

The tuned mass damper may be modular. The tuned mass damper can thereby more easily be post-mounted or retrofitted to an existing structure. For example, each of the mass arrangement, the spring arrangement and the damping arrangement can be adjusted or replaced after installation of the tuned mass damper. Thus, each of the mass arrangement, the spring arrangement, the damping arrangement, and the elongated element may be a module. Alternatively, the elongated element, the joint, the fixation member, the spring arrangement and the damping arrangement (optionally also the arms) may form one module, and the mass arrangement may form a further module. Alternatively, in case the mass arrangement comprises a plurality of weight bodies, each weight body may constitute a module.

The joint may be a two-rotational-degrees-of-freedom kinematic pair or a three-rotational-degrees-of-freedom kinematic pair. For example, the joint may be a universal joint (i.e. a two-rotational-degrees-of-freedom kinematic pair). As a further example, the joint maybe a ball joint (i.e. a three-rotational-degrees-of-freedom kinematic pair).

As an alternative to a two-rotational-degrees-of-freedom kinematic pair or a three-rotational-degrees-of-freedom kinematic pair, the joint may comprise a flexible element. Such flexible element can allow movement of the elongated element in the at least one displacement plane but can also allow movements of the elongated element along the neutral axis. The flexible element may for example be a thin rod or an elastic element, such as a rubber element.

The structure may comprise a high voltage electric device, and the tuned mass damper may be configured to be connected to the electric device for damping vibrations in the electric device. The tuned mass damper may thus be suitable for use with an electric device. In this case, the tuned mass damper may additionally comprise one or more corona shields.

The high voltage electric device may for example be a circuit breaker, an instrument transformer, a capacitor bank, standing converter valves, a series compensation platform, a high voltage direct current (HVDC) buswork, a switchyard reactor, a surge arrester, or a disconnector. A high voltage within the present disclosure may for example be a voltage of at least 30 kV, such as at least 100 kV.

The neutral axis may be substantially vertical, or vertical. In this case, the tuned mass damper may be either standing or hanging.

In case of a standing tuned mass damper, the elongated element may be arranged geodetically above the joint. A standing tuned mass damper operates as an inverted pendulum.

In case of a hanging tuned mass damper, the elongated element may be arranged geodetically below the joint. A hanging tuned mass damper operates as a pendulum.

As a conceivable alternative, the neutral axis may be oriented substantially horizontally, or horizontally. This alternative may for example be useful for structures that are weak in a vertical direction.

According to a further aspect, there is provided a system comprising a structure and a tuned mass damper according to the present disclosure connected to the structure for damping vibrations in the structure. The structure may comprise a high voltage electric device, and the tuned mass damper may be connected to the electric device for damping vibrations in the electric device. The structure comprising the high voltage electric device is a high voltage structure.

### Brief Description of the Drawings

Further details, advantages and aspects of the present disclosure will become apparent from the following embodiments taken in conjunction with the drawings, wherein:
- Fig. 1:: schematically represents a side view of a system comprising a structure and a tuned mass damper;
- Fig. 2:: schematically represents a perspective front view of the tuned mass damper; and
- Fig. 3:: schematically represents a perspective rear view of the tuned mass damper.

### Detailed Description

In the following, a tuned mass damper for damping vibrations in a structure, and a system comprising a structure and a tuned mass damper, will be described. The same or similar reference numerals will be used to denote the same or similar structural features.

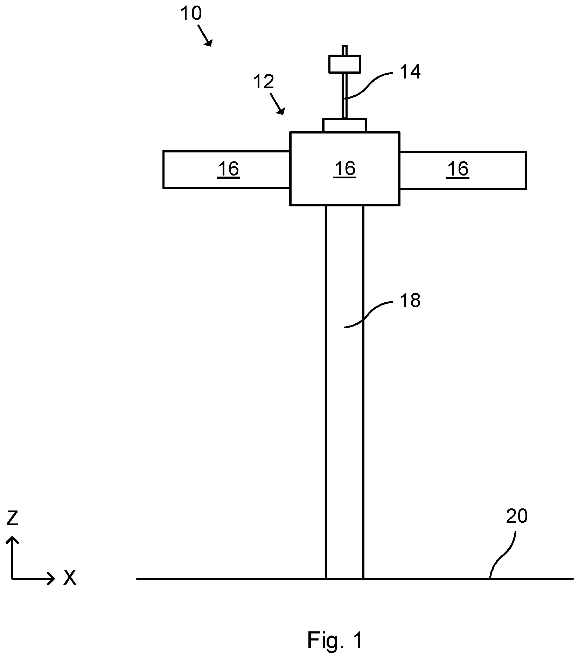

Fig. 1 schematically represents a side view of a system 10. The system 10 comprises a structure 12 and a tuned mass damper 14. The structure 12 of this example is a high voltage structure, having a system voltage of at least 100 kV. The structure 12 comprises three high voltage electric devices 16. The structure 12 further comprises an insulator 18 connected between one of the electric devices 16 and ground 20.

In Fig. 1, the tuned mass damper 14 is connected to the structure 12. More specifically, the tuned mass damper 14 is connected to one of the electric devices 16. The tuned mass damper 14 can be lifted by a crane to the top of the structure 12, either as one unit or sequentially, module by module. The tuned mass damper 14 can be installed on an already existing structure 12.

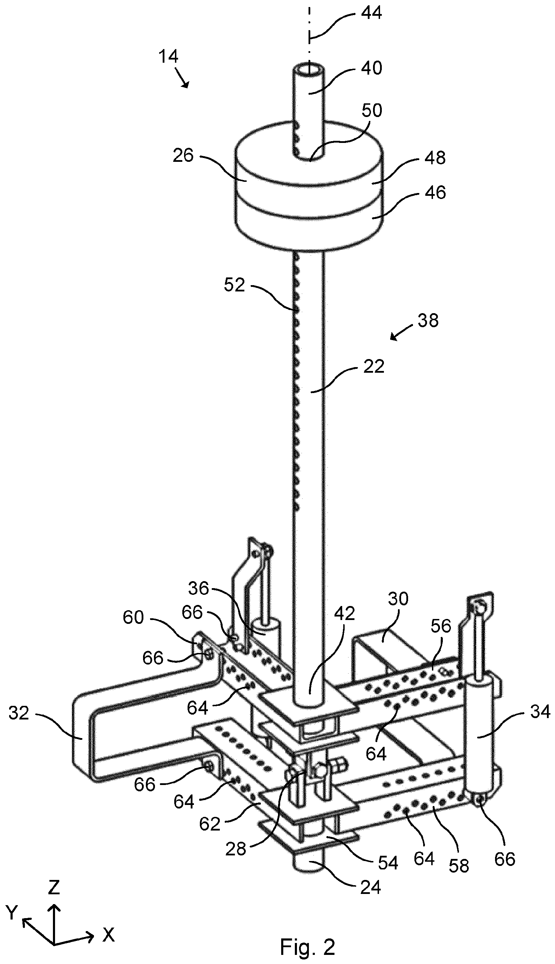

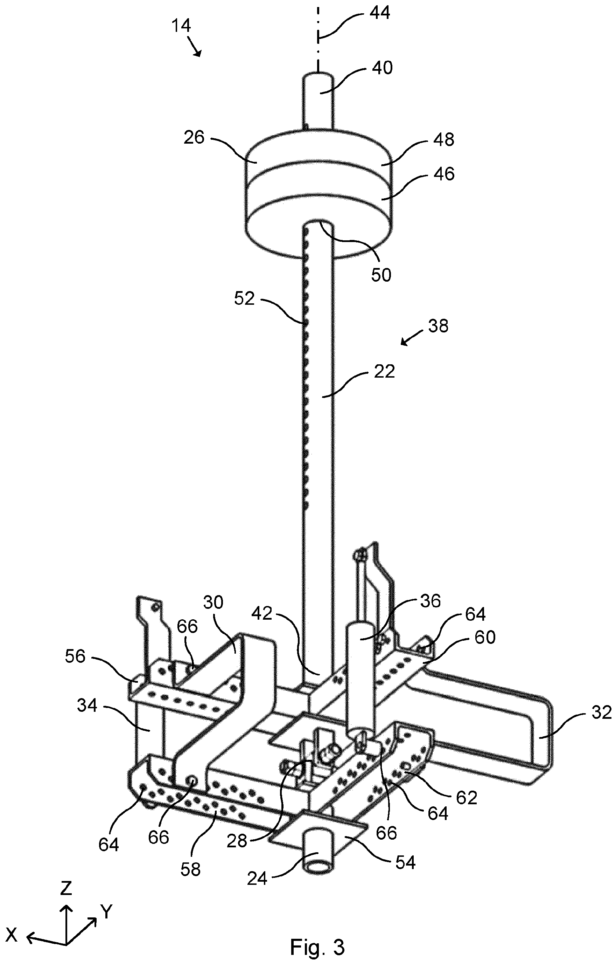

Fig. 2 schematically represents a perspective front view of the tuned mass damper 14. Fig. 3 schematically represents a perspective rear view of the tuned mass damper 14.

With collective reference to Figs. 2 and 3, the tuned mass damper 14 comprises an elongated element 22, a fixation member 24, a mass arrangement 26, a joint 28, a spring arrangement 30, 32 and a damping arrangement 34, 36. The tuned mass damper 14 is configured to dampen vibrations in the structure 12. In Figs. 2 and 3, the elongated element 22 is illustrated in a neutral position 38. Figs. 2 and 3 further shows a Cartesian coordinate system X, Y, Z for reference purposes.

The elongated element 22 comprises a free end 40 and a joint end 42 opposite to the free end 40. The elongated element 22 of this example is a straight and rigid column. In the neutral position 38, a longitudinal axis of the elongated element 22 thereby defines a neutral axis 44. The elongated element 22 is arranged to move freely in air ambient to the structure 12.

The tuned mass damper 14 of this example is standing. That is, the neutral axis 44 is vertical and the elongated element 22 is positioned geodetically above the joint 28. In this specific example, a length of the elongated element 22 is approximately 20 times a width of the elongated element 22.

In Figs. 2 and 3, there are a first displacement plane XZ and a second displacement plane YZ, perpendicular to the first displacement plane YZ. Each of the first displacement plane XZ and the second displacement plane YZ comprises the neutral axis 44. Although the origin of the coordinate system X, Y, Z is illustrated with an offset from the elongated element 22 for clarity purposes, the origin may be centered in the elongated element 22.

The fixation member 24 is fixed to the structure 12 (not shown in Figs. 2 and 3). The mass arrangement 26 is connected to the elongated element 22.

The joint 28 is arranged between the joint end 42 and the fixation member 24. In this example, the joint 28 is a cardan joint. A wide range of alternative joints 28 are however conceivable.

The joint 28 of this example has two rotational degrees of freedom perpendicular to the neutral axis 44. The joint 28 is thereby arranged to allow movements of the elongated element 22 in each of the first displacement plane XZ and the second displacement plane YZ.

The spring arrangement 30, 32 is arranged to exert a restoring spring force to the elongated element 22 when the elongated element 22 is displaced from the neutral position 38 by pivoting about the joint 28. As shown in Figs. 2 and 3, the spring arrangement 30, 32 comprises a first spring 30 and a second spring 32. The first spring 30 is associated with the first displacement plane XZ and the second spring 32 is associated with the second displacement plane YZ. In this example, each of the springs 30, 32 is a U-shaped flat spring. However, a wide range of alternative types of springs 30, 32 are conceivable.

The damping arrangement 34, 36 is arranged to exert a damping force against movements of the elongated element 22 from the neutral position 38 by pivoting about the joint 28. As shown in Figs. 2 and 3, the damping arrangement 34, 36 comprises a first damper 34 and a second damper 36. The first damper 34 is associated with the first displacement plane XZ and the second damper 36 is associated with the second displacement plane YZ. In this example, each of the dampers 34, 36 is a hydraulic damper. However, a wide range of alternative types of dampers 34, 36 are conceivable.

The mass arrangement 26 of this example comprises a first weight body 46 and a second weight body 48. Each of the weight bodies 46, 48 comprises a through hole 50 through which the elongated element 22 passes. Each of the weight bodies 46, 48 is adjustable along the elongated element 22. The elongated element 22 comprises a plurality of openings 52. Each of the weight bodies 46, 48 can be aligned with a respective opening 52 and secured to the elongated element 22 by means of a pin (not shown) engaging the opening 52. The weight bodies 46, 48 may be made of a ceramic material. As shown in Figs. 2 and 3, the weight bodies 46, 48 are rotationally symmetrical with respect to the neutral axis 44.

Since each weight body 46, 48 can be adjusted along the elongated element 22, also the mass arrangement 26 can be adjusted along the elongated element 22 to change the natural frequency of the tuned mass damper 14. By adjusting the mass arrangement 26 in this way, the natural frequency of the tuned mass damper 14 may for example be varied between 1 Hz and 10 Hz.

Additional weight bodies may be added to the elongated element 22. Alternatively, the second weight body 48 may be removed from the elongated element 22. Also in these ways, the mass arrangement 26 can be adjusted along the elongated element 22 to change the natural frequency of the tuned mass damper 14.

The fixation member 24 of this example comprises a plate 54. The fixation member 24 is fixed to the structure 12 such that all degrees of freedom between the fixation member 24 and the structure 12 are locked, for example by screwing the plate 54 to the structure 12.

The tuned mass damper 14 of this example comprises a primary first arm 56, a secondary first arm 58, a primary second arm 60 and a secondary second arm 62. The primary first arm 56 is rigidly connected to the joint end 42 of the elongated element 22, e.g. by welding. The secondary first arm 58 is rigidly connected to the rigidly connected to the fixation member 24, e.g. by welding. The primary second arm 60 is rigidly connected to the joint end 42 of the elongated element 22, e.g. by welding. The secondary second arm 62 is rigidly connected to the fixation member 24, e.g. by welding.

In the specific example in Figs. 2 and 3, the primary first arm 56 and the secondary first arm 58 are parallel with each other and perpendicular to the neutral axis 44. Moreover, the primary first arm 56 and the secondary first arm 58 are arranged in the first displacement plane XZ. The primary first arm 56 and the secondary first arm 58 extend in the same direction from the neutral axis 44. Moreover, the primary second arm 60 and the secondary second arm 62 are arranged in the second displacement plane XZ. The primary second arm 60 and the secondary second arm 62 are parallel with each other and perpendicular to the neutral axis 44. In this example, each of the primary first arm 56, the secondary first arm 58, the primary second arm 60 and the secondary second arm 62 is made of U-shaped sheet metal.

The arms 56, 58 and the arms 60, 62 do however not need to be parallel. For example, the primary first arm 56 may be angled upwards with respect to the secondary first arm 58, and the primary second arm 60 may be angled upwards with respect to the secondary second arm 62. In this way, a stroke length or amplitude of the elongated element 22 can be increased.

Each arm 56, 58, 60, 62 comprises a plurality of holes 64. The first spring 30 is connected to a hole 64 in the primary first arm 56 and to a hole 64 in the secondary first arm 58, here by means of screws. The first spring 30 is thereby arranged functionally between the joint end 42 and the fixation member 24.

The first damper 34 is connected to a hole 64 in the primary first arm 56 and to a hole 64 in the secondary first arm 58, here by means of screws. The first damper 34 is thereby arranged functionally between the joint end 42 and the fixation member 24. The first spring 30 and the first damper 34 are arranged on opposite sides of the primary first arm 56 and of the secondary first arm 58.

The second spring 32 is connected to a hole 64 in the primary second arm 60 and to a hole 64 in the secondary second arm 62, here by means of screws. The second spring 32 is thereby arranged functionally between the joint end 42 and the fixation member 24.

The second damper 36 is connected to a hole 64 in the primary second arm 60 and to a hole 64 in the secondary second arm 62, here by means of screws. The second damper 36 is thereby arranged functionally between the joint end 42 and the fixation member 24. The second spring 32 and the first damper 34 are arranged on opposite sides of the primary second arm 60 and of the secondary second arm 62.

The connections between the springs 30, 32 and the holes 64 form a plurality of attachment points 66. Also the connections between the dampers 34, 36 and the holes 64 form a plurality of attachment points 66.

By adjusting at least one attachment point 66 of the first spring 30, a spring force characteristic in the first displacement plane XZ can be adjusted, and thereby also the natural frequency of the tuned mass damper 14. By adjusting at least one attachment point 66 of the second spring 32, a spring force characteristic in the second displacement plane YZ can be adjusted, and thereby also the natural frequency of the tuned mass damper 14. By adjusting at least one attachment point 66 of the first damper 34, a damping force characteristic in the first displacement plane XZ can be adjusted. By adjusting at least one attachment point 66 of the second damper 36, a damping force characteristic in the second displacement plane YZ can be adjusted. Thus, the tuned mass damper 14 can compensate for various directional behavior of the structure 12.

The tuned mass damper 14 can be installed to an already existing high voltage structure 12, i.e. retrofitted. To this end, a first module comprising the elongated element 22, the joint 28, the fixation member 24, the arms 56, 58, 60, 62, the spring arrangement 30, 32 and the damping arrangement 34, 36 may be lifted up to the top of the electric device 16. The first module may then be connected to the electric device 16 by fixedly connecting the fixation member 24 to the electric device 16, e.g. by screwing the plate 54 to the electric device 16.

A second module comprising the first weight body 46 may then be lifted up to the top of the electric device 16. The first weight body 46 may then be lifted onto the elongated element 22, e.g. such that the free end 40 of the elongated element 22 is received through the through hole 50. The first weight body 46 may then be lowered along the elongated element 22 to a desired height where the first weight body 46 is connected to the elongated element 22, e.g. by means of a pin.

A third module comprising the second weight body 48 may then be lifted up to the top of the electric device 16. The second weight body 48 may then be lifted onto the elongated element 22, e.g. such that the free end 40 of the elongated element 22 is received through the through hole 50. The second weight body 48 may then be lowered along the elongated element 22 to a desired height where the second weight body 48 is connected to the elongated element 22, e.g. by means of a pin.

By means of the modular design, the tuned mass damper 14 can easily be retrofitted to an existing structure 12. This is particularly useful for very heavy structures 12 where a heavy tuned mass damper 14 is needed to match the natural frequency of the structure 12.

After mounting of the tuned mass damper 14, the spring arrangement 30, 32 and/or the damping arrangement 34, 36 can be adjusted to calibrate the spring force and/or the damping force, respectively. Also the mass arrangement 26 can be adjusted, if necessary.

The tuned mass damper 14 of this example is passive. When there are no vibrations in the structure 12, the elongated element 22 is forced into the neutral position 38 by means of the spring arrangement 30, 32.

By adjusting the mass arrangement 26 along the elongated element 22, by adjusting the attachment points 66 of the spring arrangement 30, 32, and/or by adjusting the attachment points 66 of the damping arrangement 34, 36, the natural frequency of the tuned mass damper 14 can be adjusted to match the natural frequency and other mechanical characteristics of the structure 12. The tuned mass damper 14 of this example is particularly effective in damping horizontal vibrations in the event of an earthquake. Vibrations from an earthquake often lie in a frequency range from 0.15 Hz to 30 Hz. The tuned mass damper 14 improves the dynamic performance of the structure 12 with little or no modification of the structure 12 itself.

In this example, i.e. for damping vibrations in the structure 12 in Fig. 1, each weight body 46, 48 may have a mass of ten kg. Thus, the mass arrangement 26 of this example may have a mass of 20 kg. The elongated element 22 may have a length of one meter. The springs 30, 32 may be chosen to match a resonance frequency of about 1.5 Hz. Each damper 34, 36 may have a damping coefficient of 1 kNs/m. Calculations show that the tuned mass damper 14 can reduce bending moments acting on the insulator 18 by 36%.

While the present disclosure has been described with reference to exemplary embodiments, it will be appreciated that the present invention is not limited to what has been described above. For example, it will be appreciated that the dimensions of the parts may be varied as needed. Accordingly, it is intended that the present invention may be limited only by the scope of the claims appended hereto.

## Claims

1. A tuned mass damper (14) for damping vibrations in a structure (12), the tuned mass damper (14) comprising:
- an elongated element (22) having a free end (40) and a joint end (42) opposite to the free end (40);
- a fixation member (24) for being fixed to the structure (12);
- a mass arrangement (26) connected to the elongated element (22), wherein a line between the fixation member (24) and the mass arrangement (26) defines a neutral axis (44) in a neutral position (38) of the elongated element (22);
- a joint (28) arranged between the joint end (42) and the fixation member (24), the joint (28) being arranged to allow movements of the elongated element (22) in at least one displacement plane (XZ, YZ) comprising the neutral axis (44);
- a spring arrangement (30, 32) arranged to exert a restoring spring force to the elongated element (22) when the elongated element (22) is displaced from the neutral position (38); and
- a damping arrangement (34, 36) arranged to exert a damping force against movements of the elongated element (22) from the neutral position (38)
wherein the at least one displacement plane (XZ, YZ) comprises a first displacement plane (XZ) and a second displacement plane (YZ);
wherein the first displacement plane (XZ) is non-parallel with the second displacement plane (YZ);
wherein the spring arrangement (30, 32) comprises a first spring (30) associated with the first displacement plane (XZ) and a second spring (32) associated with the second displacement plane (YZ); and
**characterized in that**
an attachment point (66) of the first spring (30) and/or an attachment point (66) of the second spring (32) is adjustable in order to adjust a spring characteristic of the spring force, thereby enabling different natural frequencies of the tuned mass damper in the respective first and second displacement planes.

2. The tuned mass damper (14) according to claim 1, wherein the mass arrangement (26) is adjustable along the elongated element (22).

3. The tuned mass damper (14) according to claim 2, wherein the mass arrangement (26) comprises at least one weight body (46, 48), and wherein one or more of the at least one weight body (46, 48) is movable along the elongated element (22) in order to adjust the mass arrangement (26) along the elongated element (22).

4. The tuned mass damper (14) according to claim 2 or 3, wherein the mass arrangement (26) comprises at least one weight body (46, 48), wherein one or more of the at least one weight body (46, 48) is detachably attached to the elongated element (22), and wherein the mass arrangement (26) can be adjusted along the elongated element (22) by removal of one or more of the at least one weight body (46, 48) from the elongated element (22).

5. The tuned mass damper (14) according to any of the preceding claims, wherein the damping arrangement (34, 36) comprises a first damper (34) associated with the first displacement plane (XZ) and a second damper (36) associated with the second displacement plane (YZ).

6. The tuned mass damper (14) according to claim 5, wherein an attachment point (66) of the first damper (34) and/or an attachment point (66) the second damper (36) is adjustable in order to adjust a damping characteristic of the damping force.

7. The tuned mass damper (14) according to any of the preceding claims, further comprising a primary first arm (56) and a secondary first arm (58) arranged in the first displacement plane (XZ), and a primary second arm (60) and a secondary second arm (62) arranged in the second displacement plane (YZ), wherein the primary first arm (56) is rigidly connected to the elongated element (22) and the secondary first arm (58) is rigidly connected to the fixation member (24), and wherein the primary second arm (60) is rigidly connected to the elongated element (22) and the secondary second arm (62) is rigidly connected to the fixation member (24).

8. The tuned mass damper (14) according to claim 7, wherein the first spring (30) is connected to the primary first arm (56) and to the secondary first arm (58), and wherein the second spring (32) is connected to the primary second arm (60) and to the secondary second arm (62).

9. The tuned mass damper (14) according to claim 7 or 8, when depending on claim 5, wherein the first damper (34) is connected to the primary first arm (56) and to the secondary first arm (58), and wherein the second damper (36) is connected to the primary second arm (60) and to the secondary second arm (62).

10. The tuned mass damper (14) according to any of the preceding claims, wherein the tuned mass damper (14) is modular.

11. The tuned mass damper (14) according to any of the preceding claims, wherein the joint (28) is a two-rotational-degrees-of-freedom kinematic pair or a three-rotational-degrees-of-freedom kinematic pair.

12. The tuned mass damper (14) according to any of the preceding claims, wherein the structure (12) comprises a high voltage electric device (16), and wherein the tuned mass damper (14) is configured to be connected to the electric device (16) for damping vibrations in the electric device (16).

13. The tuned mass damper (14) according to any of the preceding claims, wherein the neutral axis (44) is substantially vertical.

14. A system (10) comprising a structure (12) and a tuned mass damper (14) according to any of the preceding claims connected to the structure (12) for damping vibrations in the structure (12).

15. The system (10) according to claim 14, wherein the structure (12) comprises a high voltage electric device (16), and wherein the tuned mass damper (14) is connected to the electric device (16) for damping vibrations in the electric device (16).

## Patentansprüche

1. Abgestimmter Massendämpfer (14) zum Dämpfen von Vibrationen in einer Struktur (12), wobei der abgestimmte Massendämpfer (14) Folgendes umfasst:
- ein längliches Element (22) mit einem freien Ende (40) und einem dem freien Ende (40) gegenüberliegenden gelenkigen Ende (42);
- ein Befestigungselement (24) zum Befestigen an der Struktur (12);
- eine Massenanordnung (26), die mit dem länglichen Element (22) verbunden ist, wobei eine Linie zwischen dem Befestigungselement (24) und der Massenanordnung (26) eine neutrale Achse (44) in einer neutralen Stellung (38) des länglichen Elements (22) definiert;
- ein Gelenk (28), das zwischen dem gelenkigen Ende (42) und dem Befestigungselement (24) angeordnet ist, wobei das Gelenk (28) dazu angeordnet ist, Bewegungen des länglichen Elements (22) in mindestens einer die neutrale Achse (44) umfassenden Verschiebungsebene (XZ, YZ) zu ermöglichen;
- eine Federanordnung (30, 32), die dazu angeordnet ist, eine Rückstellfederkraft auf das längliche Element (22) auszuüben, wenn das längliche Element (22) aus der neutralen Stellung (38) verschoben wird; und
- eine Dämpfungsanordnung (34, 36), die dazu angeordnet ist, eine Dämpfungskraft gegen Bewegungen des länglichen Elements (22) aus der neutralen Stellung (38) auszuüben, wobei die mindestens eine Verschiebungsebene (XZ, YZ) eine erste Verschiebungsebene (XZ) und eine zweite Verschiebungsebene (YZ) umfasst;
wobei die erste Verschiebungsebene (XZ) nicht parallel zu der zweiten Verschiebungsebene (YZ) verläuft;
wobei die Federanordnung (30, 32) eine erste Feder (30), die der ersten Verschiebungsebene (XZ) zugeordnet ist, und eine zweite Feder (32), die der zweiten Verschiebungsebene (YZ) zugeordnet ist, umfasst; und **dadurch gekennzeichnet, dass**
ein Befestigungspunkt (66) der ersten Feder (30) und/oder ein Befestigungspunkt (66) der zweiten Feder (32) einstellbar ist, um eine Federkennlinie der Federkraft einzustellen, wodurch unterschiedliche Eigenfrequenzen des abgestimmten Massendämpfers in der betreffenden ersten und zweiten Verschiebungsebene ermöglicht werden.

2. Abgestimmter Massendämpfer (14) gemäß Anspruch 1, wobei die Massenanordnung (26) entlang des länglichen Elements (22) einstellbar ist.

3. Abgestimmter Massendämpfer (14) gemäß Anspruch 2, wobei die Massenanordnung (26) mindestens einen Gewichtskörper (46, 48) umfasst, und wobei einer oder mehrere des mindestens einen Gewichtskörpers (46, 48) entlang des länglichen Elements (22) bewegbar sind, um die Massenanordnung (26) entlang des länglichen Elements (22) einzustellen.

4. Abgestimmter Massendämpfer (14) gemäß Anspruch 2 oder 3, wobei die Massenanordnung (26) mindestens einen Gewichtskörper (46, 48) umfasst, wobei einer oder mehrere des mindestens einen Gewichtskörpers (46, 48) abnehmbar an dem länglichen Element (22) befestigt sind und wobei die Massenanordnung (26) entlang des länglichen Elements (22) durch Entfernen eines oder mehrerer des mindestens einen Gewichtskörpers (46, 48) von dem länglichen Element (22) eingestellt werden kann.

5. Abgestimmter Massendämpfer (14) gemäß einem der vorhergehenden Ansprüche, wobei die Dämpfungsanordnung (34, 36) einen ersten Dämpfer (34), der der ersten Verschiebungsebene (XZ) zugeordnet ist, und einen zweiten Dämpfer (36), der der zweiten Verschiebungsebene (YZ) zugeordnet ist, umfasst.

6. Abgestimmter Massendämpfer (14) gemäß Anspruch 5, wobei ein Befestigungspunkt (66) des ersten Dämpfers (34) und/oder ein Befestigungspunkt (66) des zweiten Dämpfers (36) einstellbar ist, um eine Dämpfungskennlinie der Dämpfungskraft einzustellen.

7. Abgestimmter Massendämpfer (14) gemäß einem der vorhergehenden Ansprüche, ferner umfassend einen primären ersten Arm (56) und einen sekundären ersten Arm (58), die in der ersten Verschiebungsebene (XZ) angeordnet sind, und einen primären zweiten Arm (60) und einen sekundären zweiten Arm (62), die in der zweiten Verschiebungsebene (YZ) angeordnet sind, wobei der primäre erste Arm (56) starr mit dem länglichen Element (22) und der sekundäre erste Arm (58) starr mit dem Befestigungselement (24) verbunden ist und wobei der primäre zweite Arm (60) starr mit dem länglichen Element (22) und der sekundäre zweite Arm (62) starr mit dem Befestigungselement (24) verbunden ist.

8. Abgestimmter Massendämpfer (14) gemäß Anspruch 7, wobei die erste Feder (30) mit dem primären ersten Arm (56) und dem sekundären ersten Arm (58) verbunden ist und wobei die zweite Feder (32) mit dem primären zweiten Arm (60) und dem sekundären zweiten Arm (62) verbunden ist.

9. Abgestimmter Massendämpfer (14) gemäß Anspruch 7 oder 8 bei Abhängigkeit von Anspruch 5, wobei der erste Dämpfer (34) mit dem primären ersten Arm (56) und dem sekundären ersten Arm (58) verbunden ist und wobei der zweite Dämpfer (36) mit dem primären zweiten Arm (60) und dem sekundären zweiten Arm (62) verbunden ist.

10. Abgestimmter Massendämpfer (14) gemäß einem der vorhergehenden Ansprüche, wobei der abgestimmte Massendämpfer (14) modular aufgebaut ist.

11. Abgestimmter Massendämpfer (14) gemäß einem der vorhergehenden Ansprüche, wobei das Gelenk (28) ein kinematisches Paar mit zwei Rotationsfreiheitsgraden oder ein kinematisches Paar mit drei Rotationsfreiheitsgraden ist.

12. Abgestimmter Massendämpfer (14) gemäß einem der vorhergehenden Ansprüche, wobei die Struktur (12) eine elektrische Hochspannungsvorrichtung (16) umfasst und wobei der abgestimmte Massendämpfer (14) dazu ausgelegt ist, mit der elektrischen Vorrichtung (16) verbunden zu werden, um Vibrationen in der elektrischen Vorrichtung (16) zu dämpfen.

13. Abgestimmter Massendämpfer (14) gemäß einem der vorhergehenden Ansprüche, wobei die neutrale Achse (44) im Wesentlichen vertikal ist.

14. System (10), umfassend eine Struktur (12) und einen abgestimmten Massendämpfer (14) gemäß einem der vorhergehenden Ansprüche, der mit der Struktur (12) verbunden ist, um Vibrationen in der Struktur (12) zu dämpfen.

15. System (10) gemäß Anspruch 14, wobei die Struktur (12) eine elektrische Hochspannungsvorrichtung (16) umfasst und wobei der abgestimmte Massendämpfer (14) mit der elektrischen Vorrichtung (16) verbunden ist, um Vibrationen in der elektrischen Vorrichtung (16) zu dämpfen.

## Revendications

1. Amortisseur de masse accordé (14) destiné à amortir les vibrations dans une structure (12), l'amortisseur de masse accordé (14) comprenant:
un élément allongé (22) ayant une extrémité libre (40) et une extrémité jointe (42) opposée à l'extrémité libre (40);
un organe de fixation (24) destiné à être fixé à la structure (12);
un agencement de masse (26) relié à l'élément allongé (22), dans lequel une ligne entre l'organe de fixation (24) et l'agencement de masse (26) définit un axe neutre (44) dans une position neutre (38) de l'élément allongé (22);
un joint (28) disposé entre l'extrémité jointe (42) et l'organe de fixation (24), le joint (28) étant agencé pour permettre les mouvements de l'élément allongé (22) dans au moins un plan de déplacement (XZ, YZ) comprenant l'axe neutre (44);
un agencement à ressort (30, 32) agencé pour exercer une force élastique de restauration sur l'élément allongé (22) lorsque l'élément allongé (22) est déplacé depuis la position neutre (38); et
un agencement d'amortissement (34, 36) agencé pour exercer une force d'amortissement à l'encontre des mouvements de l'élément allongé (22) depuis la position neutre (38),
dans lequel l'au moins un plan de déplacement (XZ, YZ) comprend un premier plan de déplacement (XZ) et un second plan de déplacement (YZ);
dans lequel le premier plan de déplacement (XZ) n'est pas parallèle au second plan de déplacement (YZ) ;
dans lequel l'agencement à ressort (30, 32) comprend un premier ressort (30) associé au premier plan de déplacement (XZ) et un second ressort (32) associé au second plan de déplacement (YZ); et
**caractérisé en ce qu'**un point de fixation (66) du premier ressort (30) et/ou un point de fixation (66) du second ressort (32) est réglable afin de régler une caractéristique de ressort de la force élastique, ce qui permet d'activer différentes fréquences naturelles de l'amortisseur de masse accordé dans les premier et second plans de déplacement respectifs.

2. Amortisseur de masse accordé (14) selon la revendication 1, dans lequel l'agencement de masse (26) peut être réglé le long de l'élément allongé (22).

3. Amortisseur de masse accordé (14) selon la revendication 2, dans lequel l'agencement de masse (26) comprend au moins un poids (46, 48) et dans lequel un ou plusieurs du ou des poids (46, 48) est mobile le long de l'élément allongé (22) afin de régler l'agencement de masse (26) le long de l'élément allongé (22).

4. Amortisseur de masse accordé (14) selon la revendication 2 ou 3, dans lequel l'agencement de masse (26) comprend au moins un poids (46, 48) et dans lequel un ou plusieurs du ou des poids (46, 48) est fixé de façon détachable à l'élément allongé (22), et dans lequel l'agencement de masse (26) peut être réglé le long de l'élément allongé (22) par le retrait d'un ou plusieurs du ou des poids (46, 48) de l'élément allongé (22).

5. Amortisseur de masse accordé (14) selon l'une quelconque des revendications précédentes, dans lequel l'agencement d'amortissement (34, 36) comprend un premier amortisseur (34) associé au premier plan de déplacement (XZ) et un second amortisseur (36) associé au second plan de déplacement (YZ).

6. Amortisseur de masse accordé (14) selon la revendication 5, dans lequel un point de fixation (66) du premier amortisseur (34) et/ou un point de fixation (66) du second amortisseur (36) est réglable afin de régler une caractéristique d'amortissement de la force d'amortissement.

7. Amortisseur de masse accordé (14) selon l'une quelconque des revendications précédentes, comprenant en outre un premier bras principal (56) et un premier bras secondaire (58) disposés dans le premier plan de déplacement (XZ), et un second bras principal (60) et un second bras secondaire (62) disposés dans le second plan de déplacement (YZ), dans lequel le premier bras principal (56) est relié de façon rigide à l'élément allongé (22) et le premier bras secondaire (58) est relié de façon rigide à l'organe de fixation (24), et dans lequel le second bras principal (60) est relié de façon rigide à l'élément allongé (22) et le second bras secondaire (62) est relié de façon rigide à l'organe de fixation (24).

8. Amortisseur de masse accordé (14) selon la revendication 7, dans lequel le premier ressort (30) est relié au premier bras principal (56) et au premier bras secondaire (58), et dans lequel le second ressort (32) est relié au second bras principal (60) et au second bras secondaire (62).

9. Amortisseur de masse accordé (14) selon la revendication 7 ou 8 lorsqu'elles dépendent de la revendication 5, dans lequel le premier amortisseur (34) est relié au premier bras principal (56) et au premier bras secondaire (58), et dans lequel le second amortisseur (36) est relié au second bras principal (60) et au second bras secondaire (62).

10. Amortisseur de masse accordé (14) selon l'une quelconque des revendications précédentes, dans lequel l'amortisseur de masse accordé (14) est modulaire.

11. Amortisseur de masse accordé (14) selon l'une quelconque des revendications précédentes, dans lequel le joint (28) est une paire cinématique à deux degrés de liberté de rotation ou une paire cinématique à trois degrés de liberté de rotation.

12. Amortisseur de masse accordé (14) selon l'une quelconque des revendications précédentes, dans lequel la structure (12) comprend un dispositif électrique à haute tension (16), et dans lequel l'amortisseur de masse accordé (14) est conçu pour être relié au dispositif électrique (16) pour amortir les vibrations dans le dispositif électrique (16).

13. Amortisseur de masse accordé (14) selon l'une quelconque des revendications précédentes, dans lequel l'axe neutre (44) est sensiblement vertical.

14. Système (10) comprenant une structure (12) et un amortisseur de masse accordé (14) selon l'une quelconque des revendications précédentes relié à la structure (12) pour amortir les vibrations dans la structure (12).

15. Système (10) selon la revendication 14, dans lequel la structure (12) comprend un dispositif électrique à haute tension (16), et dans lequel l'amortisseur de masse accordé (14) est relié au dispositif électrique (16) pour amortir les vibrations dans le dispositif électrique (16) .
